# EUROPÄISCHE PATENTANMELDUNG

(11) **EP 0 784 226 A1**
(43) Veröffentlichungstag der Anmeldung: **16.07.1997**
(21) Anmeldenummer: 97100032.8
(22) Anmeldetag: 03.01.1997
(51) Int. Cl.: G03B 7/24, G09F 3/02, G09F 3/10

(54) **Patrone für fotografischen Film**

(30) Priorität: 12.01.1996 DE 19600904
(71) Anmelder: Agfa-Gevaert AG, 51373 Leverkusen (DE)
(72) Erfinder: Haag, Wilhelm, 85521 Ottobrunn (DE); Wiedemann, Otto, 82319 Starnberg (DE)

(57) **Zusammenfassung**

Patrone für einen fotografischen Film aus einem Patronenmantel und an den beiden Enden aufgesetzten Kappen, bei der der Patronenmantel einen Bereich aufweist, der aus elektrisch leitenden und elektrisch nicht-leitenden Feldern (CAS-Felder) besteht, dadurch gekennzeichnet, daß auf den Patronenmantel aus elektrisch leitendem Material ein Etikett aus elektrisch nicht-leitendem Material aufgeklebt ist, bei dem elektrisch leitende CAS-Felder freigespart sind.

## Beschreibung

Die Erfindung betrifft eine Patrone für fotografischen Film, die auf ihrer Oberfläche mit einer Codierung versehen ist.

Es ist bekannt, Filmpatronen vom System 135 (Kleinbildfilm) mit einer Codierung zu versehen, die CAS-Felder zeigt (CAS = Camera auto sensing). Die CAS-Felder sind entweder elektrisch leitend oder nicht-leitend. Aus der Anordnung leitender und nicht-leitender Felder kann die Camera automatisch bestimmte Informationen wie Filmempfindlichkeit, Bildzahl etc. abrufen.

Die Filmpatronen werden aus einem elektrisch leitenden Material gefertigt und in einem komplizierten Verfahren bedruckt, so daß die Felder, die leitend sein sollen, leitend bleiben und die Felder, die nicht-leitend sein sollen, mit einer elektrischisolierenden Farbe bedruckt werden. Da außerdem auf die Patrone noch Produktinformationen, oft mehrfarbig aufgebracht werden, wird üblicherweise das folgende Verfahren angewandt:
1. Aufbringen eines weißen sogenannten Stanzlacks im Lackier- oder Druck-Verfahren.
2. Aufbringen von Druckfarben (außer metallischen Farben) im Naßoffset-Verfahren.
3. Aufbringen von schwarzer Druckfarbe im Bereich der CAS-Felder im Trocken- oder Naßoffset-Verfahren.
4. Aufbringen von Klarlack im Offset- oder Lackier-Verfahren.
5. Ausstanzen der Platine, d.h., des Blechs, das zum Schluß zum Patronenmantel der Patrone geformt wird.

Das gesamte Verfahren ist nicht nur aufwendig und daher kostenintensiv, es birgt auch hohe Funktionsrisiken und erfordert einen großen Prüfaufwand.

Aufgabe der Erfindung war, die aufwendig hergestellten Patronen durch einfache und dennoch sicher herzustellende Patronen zu ersetzen.

Diese Aufgabe wird mit einer Patrone gelöst, bei dem auf den Patronenmantel aus elektrisch leitendem Material ein zuvor gegebenenfalls mit allen notwendigen Produktinformationen bedrucktes Etikett aus elektrisch isolierendem Material geklebt wird, wobei elektrisch leitende CAS-Felder der Patrone freigespart, beispielsweise zuvor aus dem Etikett ausgestanzt werden. Das Etikett wird entweder auf eine Platine geklebt und die Platine wird dann zum Patronenmantel geformt oder das Etikett wird auf die bereits zum Patronenmantel geformte Platine, der noch die Kappen fehlen, oder auf die fertige Patrone geklebt.

Entweder wird der Film dann in das Gehäuse eingebracht und die Patrone durch Aufsetzen der Kappen vervollständigt oder der Film wird in die fertige Patrone durch das Patronenmaul eingespult.

In einer bevorzugten Ausführungsform wird das Etikett so groß gewählt, daß seine Seitenränder von den aufgesetzten Kappen abgedeckt werden.

Ist das Etikett kleiner als die Oberfläche des Patronenmantels, so ist es vorteilhaft, die nicht vom Etikett bedeckten Flächen (ausgenommen die leitenden CAS-Felder) zuvor so zu bedrucken, insbesondere elektrisch isolierend zu bedrucken, daß blanke Ränder vermieden werden.

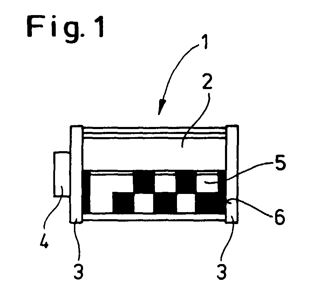

Fig. 1 zeigt eine mit CAS-Feldern versehene Patrone.

Die Patrone (1) besteht aus dem Patronenmantel (2) und den Kappen (3). An einer Seite ragt aus der Patrone die Spule (4) heraus. Durch Bedrucken (Stand der Technik) oder durch geschicktes Etikettieren (Erfindung) werden die CAS-Felder aufgebracht, von denen die hell dargestellten Felder (5) elektrisch leitend und die dunkel dargestellten Felder (6) elektrisch nicht-leitend sind.

Aus der jeweils gewählten Anordnung (durch Standardisierung festgelegt) leitender und nicht-leitender Felder entnimmt die Kamera für die Aufnahme erforderliche Informationen.

## Patentansprüche

1. Patrone für einen fotografischen Film aus einem Patronenmantel und an den beiden Enden aufgesetzten Kappen, bei der der Patronenmantel einen Bereich aufweist, der aus elektrisch leitenden und elektrisch nicht-leitenden Feldern (CAS-Felder) besteht, dadurch gekennzeichnet, daß auf den Patronenmantel oder auf die fertige Filmpatrone aus elektrisch leitendem Material ein Etikett aus elektrisch nicht-leitendem Material aufgeklebt ist, bei dem elektrisch leitende CAS-Felder freigespart sind.

2. Patrone nach Anspruch 1, dadurch gekennzeichnet, daß die Patronenkappen über die Etikettenränder reichen.

3. Patrone nach Anspruch 1, bei dem die Etikettenfläche kleiner ist als die Patronenmantelfläche, dadurch gekennzeichnet, daß die nicht vom Etikett bedeckten Teile der Patronenmantelfläche bedruckt werden.
